# EUROPÄISCHE PATENTSCHRIFT

(11) **EP 3 108 187 B1**
(45) Veröffentlichungstag und Bekanntmachung des Hinweises auf die Patenterteilung: **11.09.2019**
(21) Anmeldenummer: 15712030.4
(22) Anmeldetag: 13.02.2015
(51) Int. Cl.: E02D 5/80, F24S 25/61, F24S 25/617

(54) **VERANKERUNGSVORRICHFUNG**
ANCHORING DEVICE
DISPOSITIF D'ANCRAGE

(30) Priorität: 18.02.2014 AT 722014 U
(43) Veröffentlichungstag der Anmeldung: 28.12.2016
(73) Patentinhaber: Hilber, Franz, 6152 Trins (AT)
(72) Erfinder: Hilber, Franz, 6152 Trins (AT)
(74) Vertreter: Torggler & Hofinger Patentanwälte
(86) Internationale Anmeldenummer: PCT/AT2015/000024
(87) Internationale Veröffentlichungsnummer: WO 2015/123707

(56) Entgegenhaltungen:
- EP-A1- 2 653 630
- EP-A2- 2 224 186
- DE-A1-102008 015 780
- DE-A1-102011 014 880
- DE-U1-202009 000 701
- GB-A- 2 499 061
- US-A- 5 039 256

## Beschreibung

Die vorliegende Erfindung betrifft eine Verankerungsvorrichtung mit den Merkmalen des Oberbegriffs des Anspruchs 1.

Verankerungsvorrichtungen mit Ankerkörpern sind zum Beispiel aus der EP 1 750 020 A1 bekannt. Dort sind bereits Gewindestäbe in die Gewinde geschraubt. Solche Verankerungsvorrichtungen mit eingeschraubten Gewindestäben werden auch als Spinnanker bezeichnet.

Je nach Untergrund kann die Verankerung der Verankerungsvorrichtung im Untergrund problematisch sein. Der Ankerkörper der Verankerungsvorrichtung ist im Stand der Technik der Witterung ausgesetzt, was vor allem in der Nähe stark befahrener und im Winter eingesalzener Straßen beispielsweise zu einer Korrosion führen kann. Der Ankerkörper weist nur eine einzige Befestigungsmöglichkeit für die zu verankernde Vorrichtung auf. Die Verankerungsvorrichtung kann hauptsächlich nur auf Druck und Zug beansprucht werden. Bei Drehmomenten oder Scherkräften treten höhere Verformungen auf.

Tragvorrichtungen haben in der Praxis bisher nur statische Aufgaben. Tragvorrichtungen müssen bei Betrieb des elektrischen Generators stets an das öffentliche Netz angebunden oder mit allfällig vorhandenen externen Energiespeichern verbunden sein. Es sind also stets Leitungen zu verlegen.

Verankerungsvorrichtungen mit Ankerkörpern und gemeinsamen Lagern sind in US 5,039,256 gezeigt. Aufgabe der Erfindung ist die Bereitstellung einer gegenüber dem gattungsgemäßen Stand der Technik verbesserten Verankerungsvorrichtung.

Diese Aufgabe wird durch eine Verankerungsvorrichtung mit den Merkmalen des Anspruchs 1 gelöst.

Vorteilhafte Ausführungen der Erfindung sind in den abhängigen Ansprüchen definiert.

Das Anordnen der Vielzahl von Gewinden im Block aus Gussmaterial, wobei die Gewinde in einem gemeinsamen Ankerkörper ausgebildet und in den Block aus Gussmaterial eingegossen
sind, weist verschiedene Vorteile auf:
Der Block aus Gussmaterial (Beton, aber auch Kunststoff aber auch andere Vergussmaterialien wären denkbar) bildet eine Art von Fundament, welches eine sichere Verankerung der Verankerungsvorrichtung auch in einem problematischen Untergrund (wie zum Beispiel bindige Böden) gestattet.
- Das Gussmaterial schützt zumindest einen Teil des Verankerungskörpers vor Witterung.
- Am oder im Gussmaterial können nach Belieben Befestigungsvorrichtungen für die zu verankernde Vorrichtung angeordnet werden.
- Gegenüber der Verwendung von Ortsbeton besteht ein Vorteil der vorgefertigten Blöcke aus Gussmaterial in der Tatsache, dass diese leichter an den Bestimmungsort bringbar sind als zum Beispiel ein Betonmischwagen und die vorgefertigten Blöcke an Ort und Stelle nicht mehr aushärten müssen.
- Der Block aus Gussmaterial kann für einen Höhenausgleich verwendet werden. Ist beispielsweise mittels mehrerer erfindungsgemäßer Verankerungsvorrichtungen eine Konstruktion an einem Untergrund anzuordnen, der nicht überall dieselbe Höhe aufweist, werden die jeweiligen Blöcke aus Gussmaterial der einzelnen Verankerungsvorrichtungen so hoch gewählt, dass ihre unterschiedlichen Höhen die Höhenunterschiede des Untergrunds ausgleichen, sodass die Montage der Konstruktion an den Verankerungsvorrichtungen auf einem einzigen Höhenniveau stattfinden kann.

Reichen die Gewinde des einen Ankerkörpers nicht bis zur Außenseite des Blocks aus Gussmaterial, können im Block aus Gussmaterial Kanäle angeordnet werden (zum Beispiel durch Anordnen von Gewindehülsen oder Leerhülsen vor dem Ausgießen), welche mit den Gewinden fluchten.

Wenigstens eine Befestigungsvorrichtung zum Befestigen einer zu verankernden Vorrichtung ist in den Block aus Gussmaterial eingegossen.

Die Verankerungsvorrichtung gemäß der Erfindung wird anhand der Figur 8a bis 8c diskutiert. Es zeigen:
- Figur 1a bis 1e: eine Verankerungsvorrichtung mit nur einem Ankerkörper,
- Figur 2a bis 2e: eine Verankerungsvorrichtung mit zwei Ankerkörpern,
- Figur 3a bis 3e: eine Verankerungsvorrichtung mit drei Ankerkörpern,
- Figur 4: eine Tragvorrichtung,
- Figur 5: eine zweite Tragvorrichtung,
- Figur 6a bis 6d: ein Beispiel ohne Ankerkörper,
- Figur 7a, 7b: eine weitere Verankerungsvorrichtung und
- Figur 8a bis 8c: ein Ausführungsbeispiel der Erfindung.

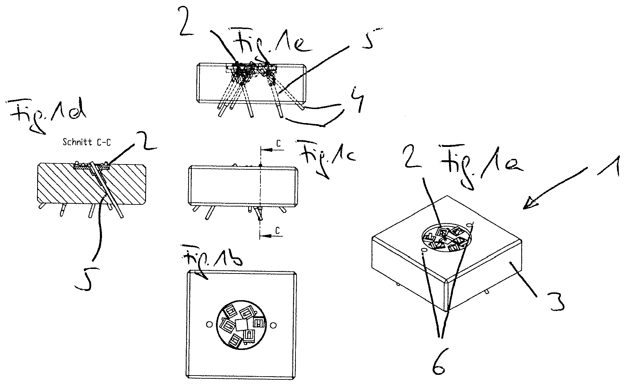

Hinsichtlich der Figuren 1 bis 3 zeigen die Unterfiguren "a" jeweils eine perspektivische Ansicht, die Unterfiguren "b" eine Draufsicht, die Unterfiguren "c" eine Seitenansicht, die Unterfiguren "d" eine Schnittdarstellung entlang der in den Unterfiguren "c" dargestellten Schnitte und die Unterfiguren "e" Ansichten, in welchen der Block 3 aus Gussmaterial fiktiv transparent dargestellt ist um eine Darstellung des Innenlebens zu gestatten.

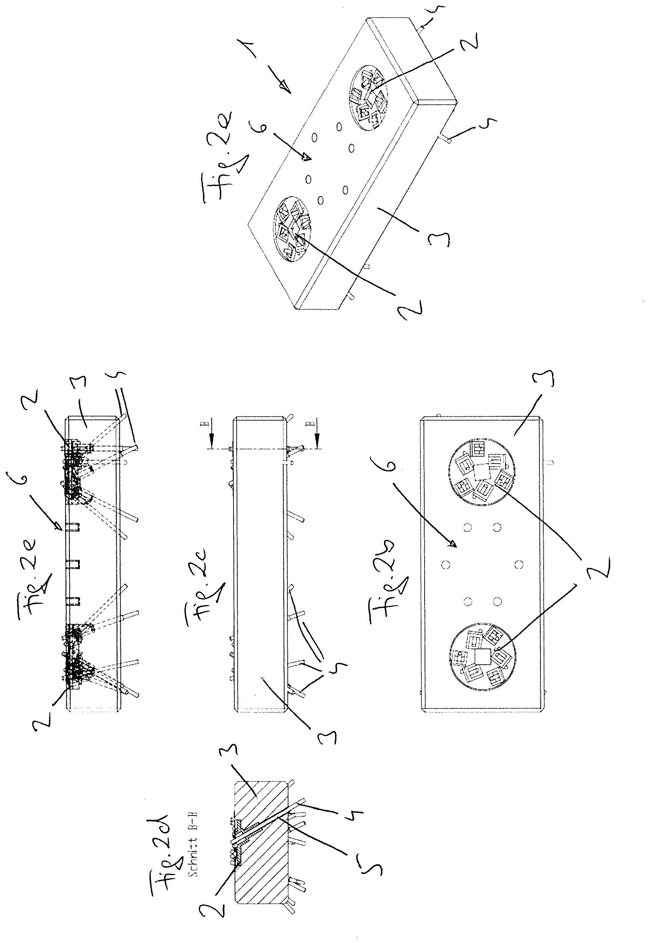

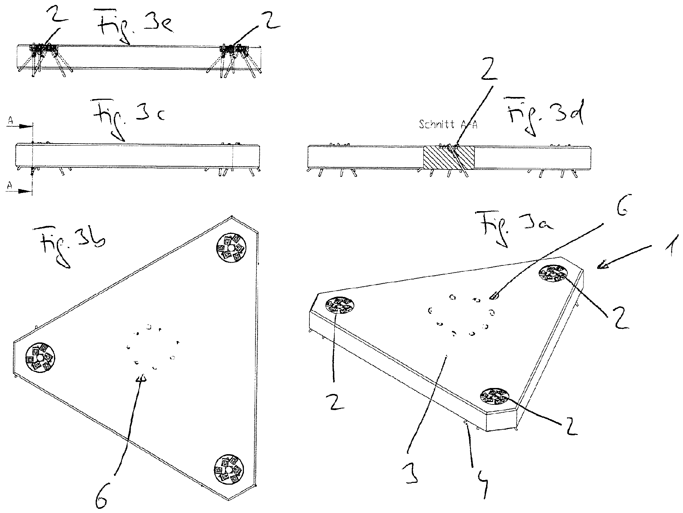

Wie aus einem Vergleich der Figuren 1 bis 3 hervor geht, können die Blöcke 3 aus Gussmaterial geometrisch nach Belieben ausgebildet werden (Figur 1 und 2: Quader, Figur 3: Zylinder mit dreieckiger Grundfläche).

In den Figuren 1 bis 3 ist jeweils ein Beispiel einer Verankerungsvorrichtung 1 gezeigt. Unterschiedlich viele Ankerkörper 2 sind jeweils in einen Block 3 aus Gussmaterial (hier: Beton) eingegossen.

In die Gewinde der Ankerkörper 2 sind bereits Gewindestäbe 4 eingeschraubt. Diese sind allerdings nur über einen Bruchteil ihrer tatsächlichen Länge dargestellt.

Exemplarisch ist in den Unterfiguren "e" jeweils eine Hülse in einem Kanal 5 dargestellt. Auch in den anderen Kanälen 5 könnten derartige Hülsen vorgesehen sein.

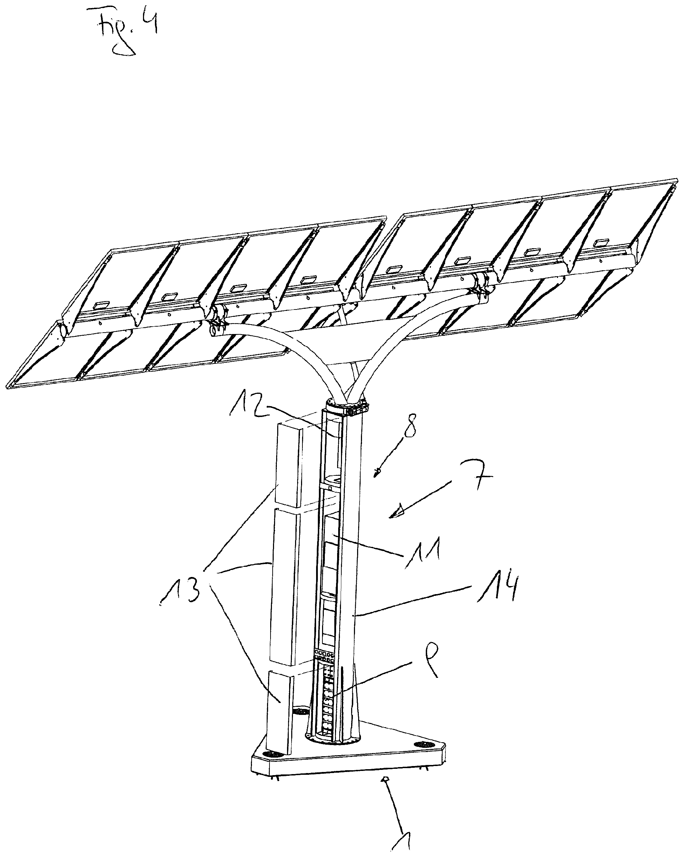

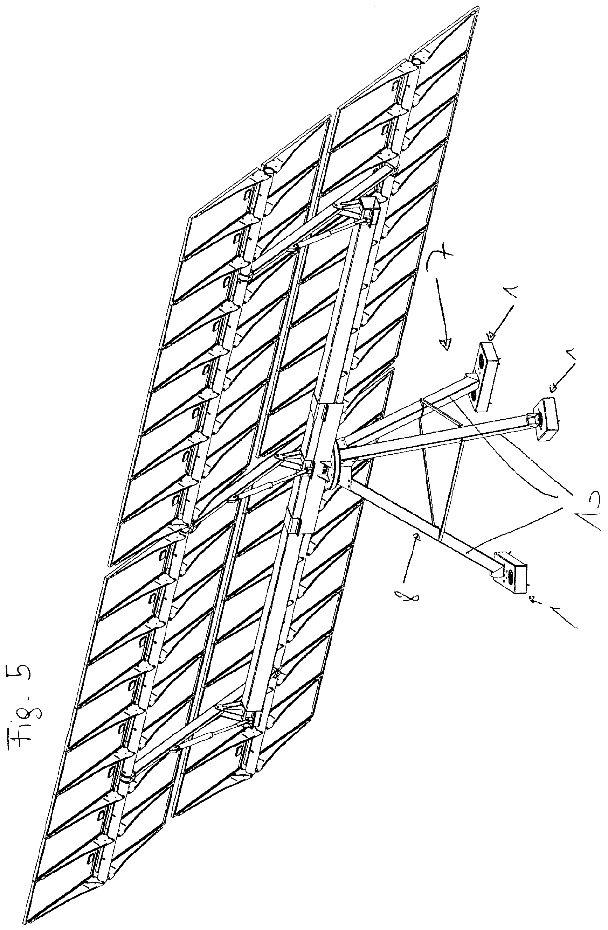

In allen Verankerungsvorrichtungen ist eine Befestigungsvorrichtung 6 (hier: Winkelanker) in den Block 3 eingegossen. Diese dienen der Befestigung einer einer zu verankernden Vorrichtung (siehe zum Beispiel die Figuren 4 und 5).

Die Figuren 4 und 5 zeigen Tragvorrichtungen 7 für einen elektrischen Generator, (hier PV-Anlage), mit zumindest einer das Gewicht des zu tragenden Generators wenigstens teilweise abstützenden, einen Hohlraum aufweisenden Stützvorrichtung 8 (Figur 4: einzelne Säule 14; Figur 5: drei Ständer 10) und einem elektrischen Energiespeicher 9 zum Speichern von durch den zu tragenden Generator erzeugten Energie. Der elektrische Energiespeicher 9 ist im Hohlraum der zumindest einen Stützvorrichtung 8 angeordnet ist.

In unterschiedlichen Hohlräumen wie der elektrische Energiespeicher 9 sind ein Wechselrichter 12 und ein elektrischer Schaltschrank 11 angeordnet.

In der Ausführung nach Figur 5 können diese Komponenten in demselben Ständer 10 oder in unterschiedlichen Ständern 10 angeordnet werden. Die entsprechenden Hohlräume sind in Figur 5 nicht erkennbar, da sie durch die Abdeckung der Ständer 10 verdeckt werden. Die Ausgestaltung der Hohlräume kann so wie in Figur 4 erfolgen.

Die Hohlräume sind durch Deckel 13 öffenbar verschließbar.

Exemplarisch ist die Befestigung der Tragvorrichtung 7 an unterschiedlichen Verankerungsvorrichtungen 1 dargestellt.

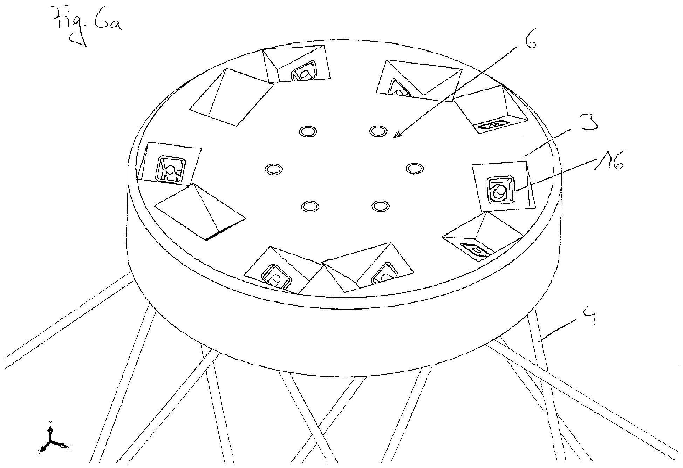

Die Fig. 6a zeigt eine perspektivische Ansicht eines Blockes 3 aus Gussmaterial, in welchen eine Vielzahl von Gewindehülsen 15 ohne Verwendung eines gemeinsamen Ankerkörpers 2 eingegossen sind. In die Gewindehülsen 15 (die hier beispielhaft einen sechseckigen Außendurchmesser aufweisen) sind Gewindestäbe 4 eingeschraubt. Zum Einschrauben der Gewindestäbe 4 mittels einer Einschraubvorrichtung ist jeweils eine Formhülse 16 vorgesehen, die der Einschraubvorrichtung als drehfestes Gegenlager dient. In den Block 3 ist eine Befestigungsvorrichtung 6 eingegossen, die hier aus einer Vielzahl von Gewindehülsen besteht.

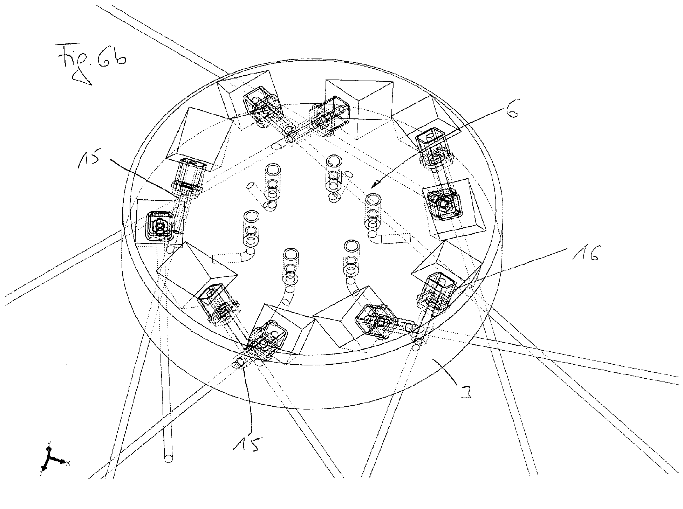

Die Fig. 6b zeigt die Ausführung der Fig. 6a in einer das Innenleben zeigenden transparenten Darstellung.

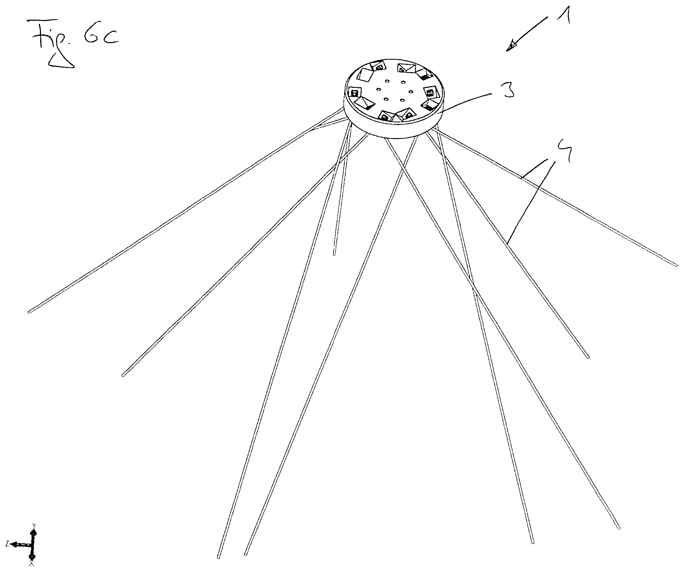

Die Fig. 6c zeigt eine Gesamtansicht der Verankerungsvorrichtung 1.

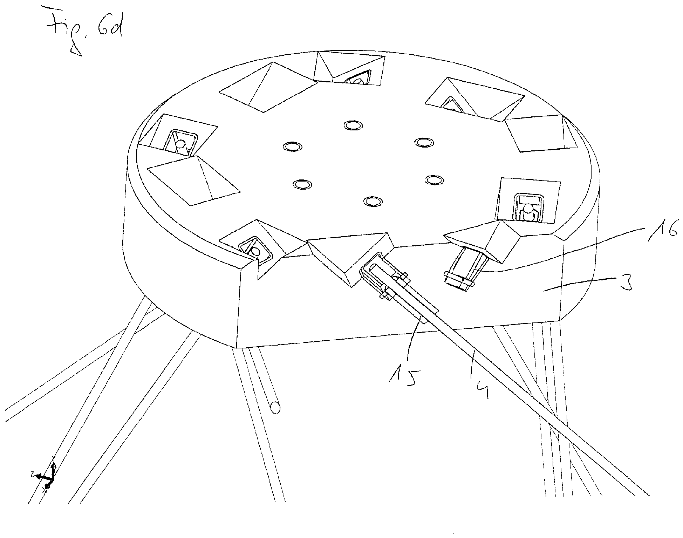

Die Fig. 6d zeigt die Ausführung der Fig. 6b, wobei der Block 3 aus Gussmaterial teilweise weggeschnitten ist.

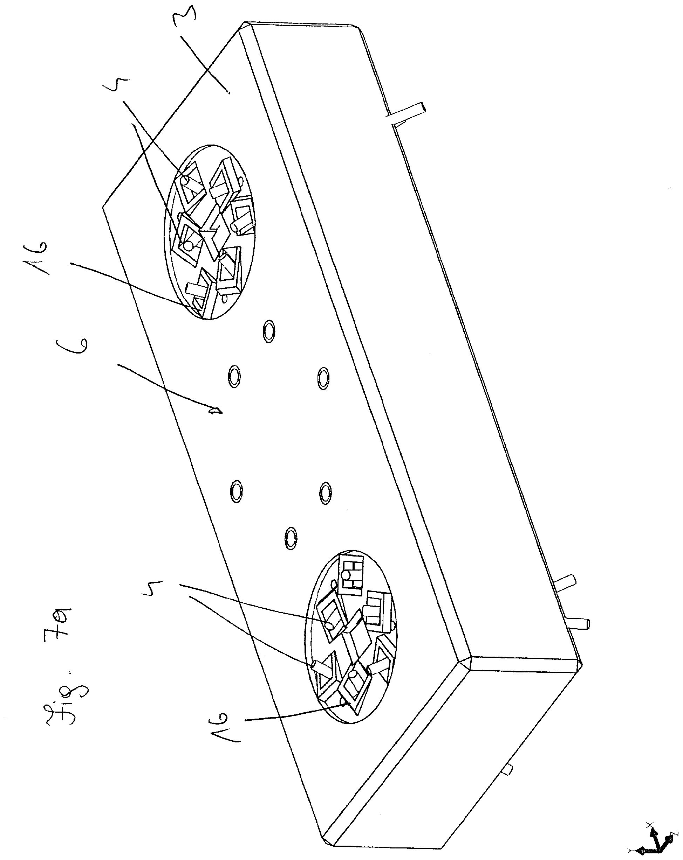

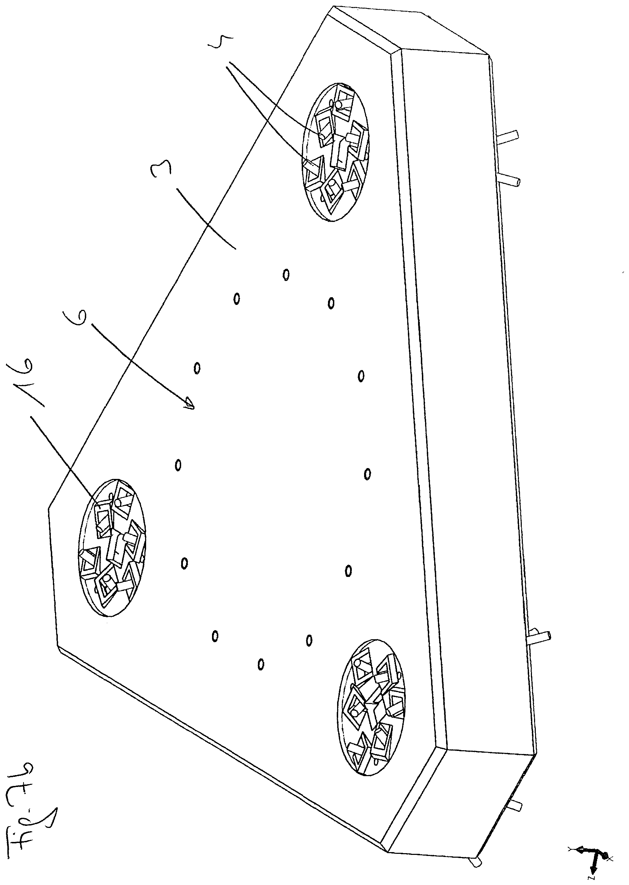

Die Fig. 7a und 7b zeigen quaderförmig bzw. in etwa prismatisch ausgebildete Blöcke 3 aus Gussmaterial in die jeweils wie in Fig. 6 eine Vielzahl von Gewindehülsen 15 eingegossen sind.

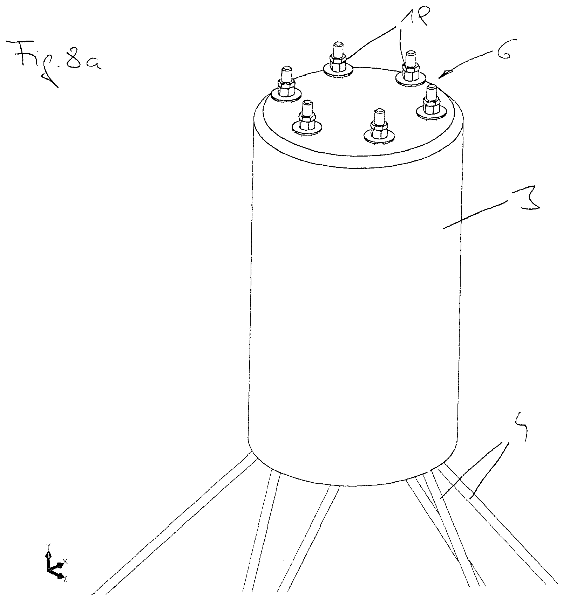

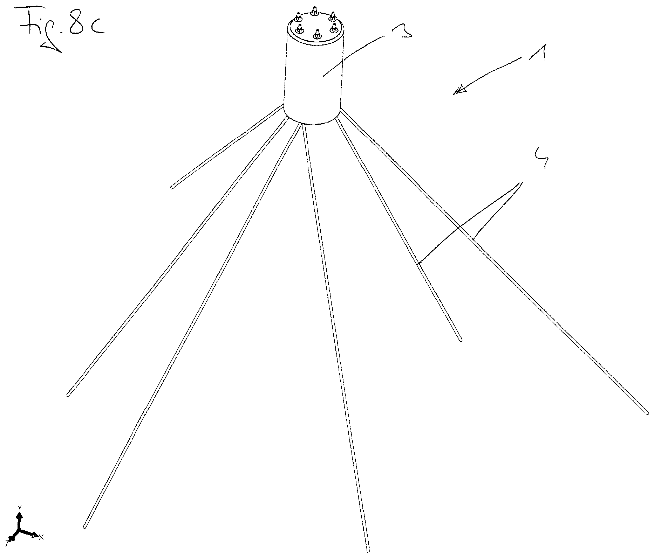

Die Fig. 8a zeigt ein Ausführungsbeispiel der Erfindung, bei welchem ein Ankerkörper 2 zur Anwendung kommt. Der Block 3 aus Gussmaterial ist hier zylindrisch ausgebildet. Die Fig. 8c zeigt eine Gesamtansicht der Verankerungsvorrichtung 1.

Die zu verankernde Konstruktion (nicht dargestellt) liegt an der Oberseite des Blockes 3 aus Gussmaterial auf und wird durch die beispielhaft gezeigten Muttern 19 niedergezwungen.

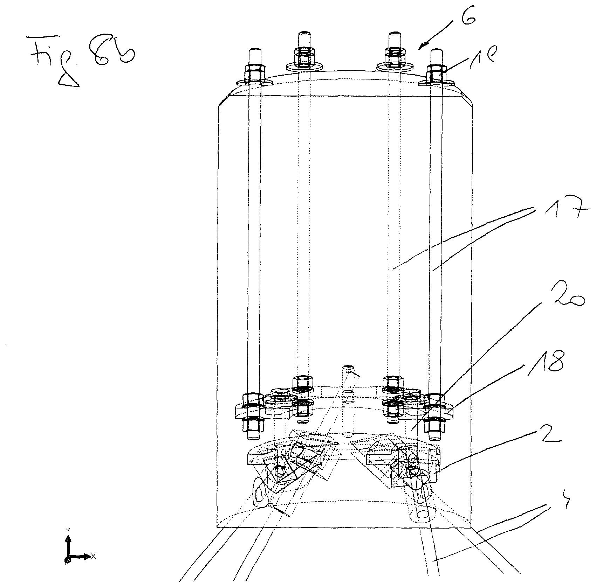

Exemplarisch ist in Fig. 8b (Fig. 8a mit einem Schnitt durch die Mittelebene des Blockes 3 aus Gussmaterial) die Möglichkeit des Höhenausgleichs gezeigt. Zu diesem Zweck wird die Höhe des Blockes 3 aus Gussmaterial geeignet gewählt. Zur Überbrückung der ggf. größeren Höhe kommen Gewindestäbe 17 zum Einsatz, die hier in einem gemeinsamen Lager 18 befestigt sind. Unterhalb des Lagers 18 ist der Ankerkörper 2 zu erkennen. Über Schrauben 20 sind der Ankerkörper 2 und das gemeinsame Lager 18 miteinander verbunden. Zu beachten ist, dass aufgrund des hier gewählten Schnittes der Ankerkörper 2 und das gemeinsame Lager 18 nur teilweise zu erkennen sind.

Bei der Verankerungsvorrichtung 1 kann die Höhe des Blocks 3 aus Gussmaterial geeignet gewählt werden, um allfällige Niveauunterschiede des Untergrunds auszugleichen.

## Patentansprüche

1. Verankerungsvorrichtung (1), mit einem Block (3) aus Gussmaterial, wobei der Block (3) aus Gussmaterial ein Betonblock oder ein ggf. faserverstärkter Kunstharzblock ist und wobei ein Ankerkörper (2) in den Block (3) aus Gussmaterial eingegossen ist, , wobei der Ankerkörper (2) eine Vielzahl von Gewinden mit verschiedener Neigung aufweist, durch die Gewindestäbe (4) schraubbar sind, welche unten über den Block (3) aus Gussmaterial hinausragen und wobei oberhalb des Ankerkörpers (2) im Block (3) aus Gussmaterial ein gemeinsames Lager (18) mit Gewindestäben (17) vorgesehen ist, welches über Schrauben (20) mit dem Ankerkörper (2) verbunden ist, wobei die im gemeinsamen Lager (18) befestigten Gewindestäbe (17) oben über den Block (3) aus Gussmaterial hinausragen.

2. Verankerungsvorrichtung (1) nach Anspruch 1, **dadurch gekennzeichnet, dass** im Block (3) aus Gussmaterial Kanäle (5) angeordnet sind, welche mit den Gewinden fluchten.

3. Verankerungsvorrichtung (1) nach Anspruch 2, **dadurch gekennzeichnet, dass** in den Kanälen (5) Hülsen, vorzugsweise Gewindehülsen, angeordnet sind.

4. Verankerungsvorrichtung (1) nach Anspruch 2, **dadurch gekennzeichnet, dass** die durch das Gussmaterial gebildeten Wände der Kanäle mit Gewinden versehen sind.

5. Verankerungsvorrichtung (1) nach wenigstens einem der vorangehenden Ansprüche, **dadurch gekennzeichnet, dass** im Block (3) aus Gussmaterial eine Bewehrung - vorzugsweise aus Eisen oder aus einem Glas- oder Carbonmaterial - angeordnet ist.

## Claims

1. An anchoring device (1) comprising a block (3) of cast material, wherein the block (3) of cast material is a concrete block or a possibly fibre-reinforced synthetic resin block and wherein an anchor body (2) is cast into the block (3) of cast material, wherein the anchor body (2) has a plurality of threads of differing inclination, through which threaded rods (4) can be screwed, which project at the underside beyond the block (3) of cast material and wherein provided above the anchor body (2) in the block (3) of cast material is a common mounting (18) with threaded rods (17), which mounting is connected to the anchor body (2) by way of screws (20), wherein the threaded rods (17) fixed in the common mounting (18) project at the top beyond the block (3)

2. An anchoring device (1) according to claim 1 **characterised in that** arranged in the block (3) of cast material are passages (5) which align with the threads.

3. An anchoring device (1) according to claim 2 **characterised in that** sleeves, preferably threaded sleeves, are arranged in the passages (5)

4. An anchoring device (1) according to claim 2 **characterised in that** the walls of the passages, that are formed by the cast material, are provided with threads.

5. An anchoring device (1) according to at least one of the preceding claims **characterised in that** a reinforcement - preferably of iron or a glass or carbon material - is arranged in the block (3) of cast material.

## Revendications

1. Dispositif d'ancrage (1), avec un bloc (3) composé de matériau de coulée, dans lequel le bloc (3) composé de matériau de coulée est un bloc en béton ou un bloc en résine synthétique éventuellement renforcé par des fibres et dans lequel un corps d'ancrage (2) est coulé dans le bloc (3) composé de matériau de coulée, dans lequel le corps d'ancrage (2) présente une pluralité de filetages avec une inclinaison différente, par lesquels des tiges filetées (4) peuvent être vissées, lesquelles dépassent en bas au-delà du bloc (3) composé de matériau de coulée et dans lequel un palier (18) commun avec des tiges filetées (17) est prévu au-dessus du corps d'ancrage (2) dans le bloc (3) composé de matériau de coulée, lequel est relié au corps d'ancrage (2) par l'intermédiaire de vis (20), dans lequel les tiges filetées (17) fixées dans le palier (18) commun dépassent en haut au-delà du bloc (3) composé de matériau de coulée.

2. Dispositif d'ancrage (1) selon la revendication 1, **caractérisé en ce que** sont disposés dans le bloc (3) composé de matériau de coulée des canaux (5), lesquels sont en affleurement avec les filetages.

3. Dispositif d'ancrage (1) selon la revendication 2, **caractérisé en ce que** des douilles, de préférence des douilles filetées, sont disposées dans les canaux (5).

4. Dispositif d'ancrage (1) selon la revendication 2, **caractérisé en ce que** les parois, formées par le matériau de coulée, des canaux sont pourvues de filetages.

5. Dispositif d'ancrage (1) selon au moins l'une quelconque des revendications précédentes, **caractérisé en ce qu'**un blindage, de préférence composé de fer ou d'un matériau en verre ou en carbone, est disposé dans le bloc (3) composé de matériau de coulée.
